# EUROPÄISCHE PATENTSCHRIFT

(11) **EP 0 734 922 B1**
(45) Veröffentlichungstag und Bekanntmachung des Hinweises auf die Patenterteilung: **02.08.2000**
(21) Anmeldenummer: 96103531.8
(22) Anmeldetag: 07.03.1996
(51) Int. Cl.: B60R 22/28, F16F 7/12

(54) **Kraftbegrenzung in einem Insassen-Rückhaltesystem**
Force limitation in an occupant restraint system
Limitation de force dans un système de retenue de passager

(30) Priorität: 29.03.1995 DE 19511457
(43) Veröffentlichungstag der Anmeldung: 02.10.1996
(60) Teilanmeldung: 00101613.8
(73) Patentinhaber: TRW Occupant Restraint Systems GmbH & Co. KG, 73551 Alfdorf (DE)
(72) Erfinder: Böhmler, Klaus, 73525 Schwäbisch Gmünd (DE)
(74) Vertreter: Degwert, Hartmut, Dipl.-Phys.

(56) Entgegenhaltungen:
- EP-A- 0 404 075
- EP-A- 0 540 921
- DE-A- 1 812 864
- DE-A- 2 314 022
- DE-A- 2 344 308
- DE-A- 2 727 470
- DE-A- 3 842 791
- DE-A- 19 517 440
- US-A- 4 027 905
- US-A- 4 886 295

## Beschreibung

Die Erfindung betrifft ein Verfahren zur Begrenzung der in einem Insassen-Rückhaltesystem über einen Gurt auf den Insassen ausgeübten Rückhaltekraft sowie einen Kraftbegrenzer, mit dem das Verfahren ausführbar ist.

Im Verlauf des Rückhaltevorganges treten im Gurtband Kraftspitzen auf, durch die das Verletzungsrisiko erhöht wird. Es wurden daher Kraftbegrenzer entwickelt, die im Kraftfluß des Gurtsystems angeordnet werden und Kraftspitzen durch plastische Materialverformung abbauen.

Ein optimaler Schutz des Insassen wird durch kombinierten Einsatz des Sicherheitgurts mit einem aufblasbaren Rückhalteelement (Airbag) erreicht. Bei einem solchen kombinierten Rückhaltesystem kommt es nach einer bestimmten Wegstrecke der Vorverlagerung des Insassen zu einer Berührung zwischen dem Gurt und dem aufgeblasenen Rückhalteelement. Es wurde nun gefunden, daß spätestens nach dem Eintreten dieser Berührung die Kennlinie, welche die Kraft über den Vorverlagerungsweg darstellt, eine abfallende Tendenz aufweisen sollte, so daß die vom Gurt aufgebrachte Rückhaltekraft abnimmt.

Bei den herkömmlichen Kraftbegrenzern ist die Kennlinie der Kraft über den Vorverlagerungsweg konstruktiv fest vorgegeben. Je nach Körpergröße und/oder -gewicht des Fahrzeuginsassen wäre aber für ein minimales Verletzungsrisiko ein unterschiedlicher Verlauf dieser Kennlinie erwünscht.

Die gattungsbildende DE-A-27 27 470 zeigt einen Kraftbegrenzer, der die zur Begrenzung der in einem Insassen-Rückhaltesystem über einen Gurt auf den Insassen ausgeübten Rückhaltekraft durch plastische Materialverformung begrenzt. Die Stärke der plastischen Materialverformung ist in Abhängigkeit von einem Parameter veränderlich, der für die Körpergröße oder das Gewicht des Insassen repräsentativ ist. Ferner ist aus dieser Druckschrift ein entsprechendes Verfahren zur Begrenzung der auf den Insassen ausgeübten Rückhaltekraft bekannt, bei dem das Niveau der Kraftbegrenzung in Abhängigkeit von diesem Parameter eingestellt wird.

Durch die Erfindung wird ein Kraftbegrenzer zur Begrenzung der in einem Insassen-Rückhaltesystem über den Gurt auf den Insassen ausgeübten Rückhaltekraft zur Verfügung gestellt, die eine Optimierung der die Kraft über dem Vorverlagerungsweg darstellenden Kennlinie ermöglicht. Gemäß der Erfindung wird eine solche Optimierung mit einem Kraftbegrenzer mit den Merkmalen des Anspruchs 1 erreicht.

Weitere Merkmale und Vorteile der Erfindung ergeben sich aus der folgenden Beschreibung mehrerer Ausführungsformen und aus der Zeichnung, auf die Bezug genommen wird.

In der Zeichnung zeigen:
- Fig. 1: ein Diagramm mit einer die Kraft über der Vorverlagerungsstrecke darstellenden Kennlinie;
- Fig. 2a: eine erste Ausführungsform eines Kraftbegrenzers;
- Fig. 2b: die zugehörige Kennlinie;
- Fig. 3a: schematisch eine Gurtwelle eines Gurtaufrollers mit integriertem Kraftbegrenzer gemäß einer zweiten Ausführungsform;
- Fig. 3b: die zugehörige Kennlinie;
- Figuren 3c bis 3f: Einzelheiten dieser Ausführungsform des Kraftbegrenzers.

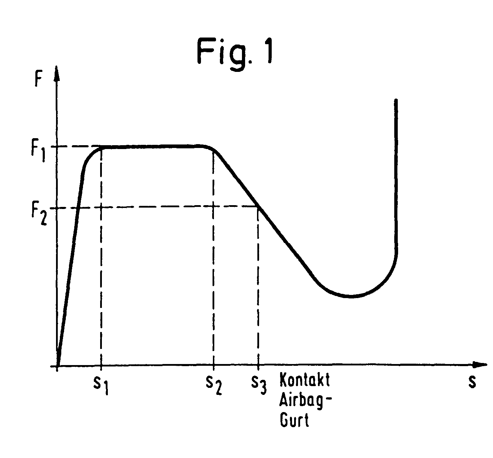

Bei der Vorverlagerung des mit einem Gurt gesicherten Insassen steigt die Gurtkraft F zunächst steil an, wird aber nach einer kurzen Strecke s₁ durch einen mit plastischer Materialverformung arbeitenden Kraftbegrenzer auf einen Wert F₁ begrenzt. Im Idealfall verbleibt die Kraft über eine größere Wegstrecke auf diesem Wert F₁. In einem Rückhaltesystem, das zusätzlich zu dem Gurt ein aufblasbares Rückhalteelement (Airbag) aufweist, trifft nach einer bestimmten Vorverlagerungsstrecke der Gurt auf das aufgeblasene Rückhalteelement. Zu diesem Zeitpunkt, der einer Wegstrecke s₃ im Diagramm der Fig. 1 entspricht, sollte die Kennlinie eine deutlich abfallende Tendenz aufweisen, damit die Summe der Gurtkraft und der Stützkraft durch das aufgeblasene Rückhalteelement keinen zu hohen Wert annimmt. Schon vor Erreichen der Wegstrecke s₃, nämlich bei s₂, geht daher die Kennlinie in einen abfallenden Ast über.

Nun ist aber bei größeren oder schwereren Personen ein höheres Kraftniveau als bei kleineren oder leichteren Insassen erwünscht. Mit bekannten Kraftbegrenzern ist ein solches Verhalten nicht zu erreichen.

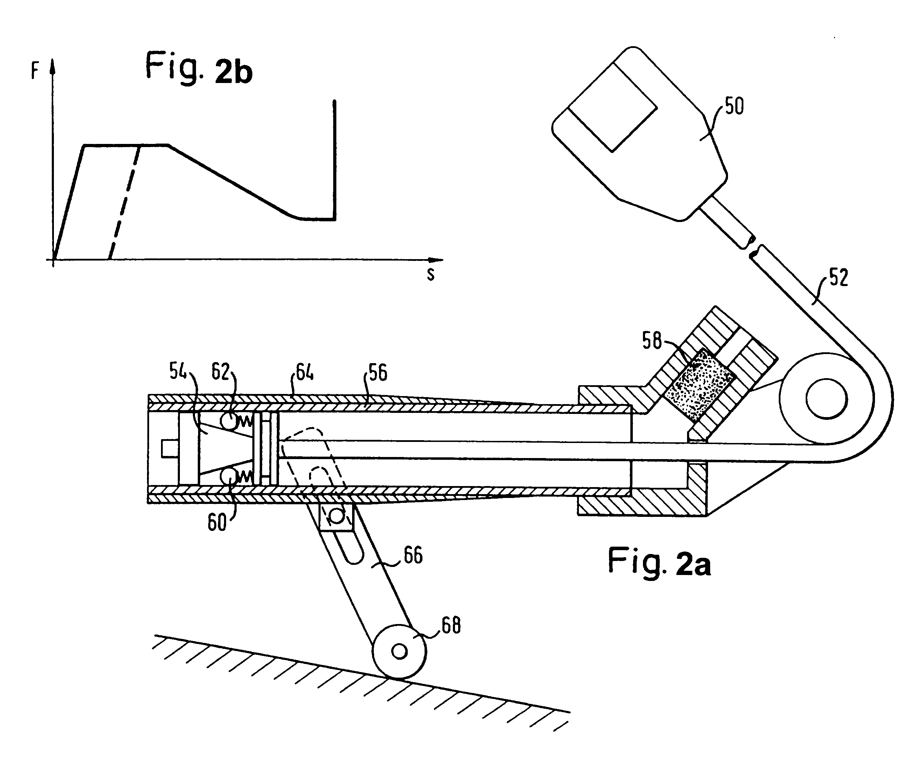

Bei der Ausführungsform nach Fig. 2a ist ein Gurtschloß 50 über ein Zugseil 52 an den Kolben 54 einer Kolben/Zylinder-Einheit angeschlossen, deren Zylinder 56 an einen pyrotechnischen Gasgenerator 58 angeschlossen ist. Der Kolben 54 weist einen kegelförmigen Abschnitt auf, auf dem zwei Wälzkörper 60, 62 abgestützt sind, die innen an der Wandung des Zylinders 56 angreifen. Fig. 2a zeigt die Kolben/Zylinder-Einheit nach Aktivierung des Gasgenerators 58 zur Straffung des Gurtbandes. Ausgehend von dieser Stellung kann eine Rückbewegung des Kolbens 54 nur erfolgen, wenn die Zylinderwandung durch die Wälzkörper 60, 62 plastisch verformt wird. Der Verformungswiderstand der Zylinderwandung wird durch eine aufgeschobene Hülse 64 variabler Wandstärke verändert. An der Hülse 64 greift ein zweiarmiger Hebel 66 an, der schwenkbar gelagert ist und an seinem von der Hülse 64 abgewandten Ende eine Rolle 68 trägt, die auf einer Rampe am Fahrzeugboden abgestützt ist. Da die in Fig. 2a gezeigte Kolben/Zylinder-Einheit mit dem Gurtschloß 50 an einem Fahrzeugsitz montiert ist, wird die gesamte Anordnung bei Verschiebung des Fahrzeugsitzes mitbewegt, wodurch die Neigung des Hebels 66 verändert und folglich die Längsposition der Hülse 64 auf der Zylinderwandung verändert wird. Fig. 2b zeigt beispielshalber zwei aus der Verstellung der Hülse 64 resultierende Kennlinien.

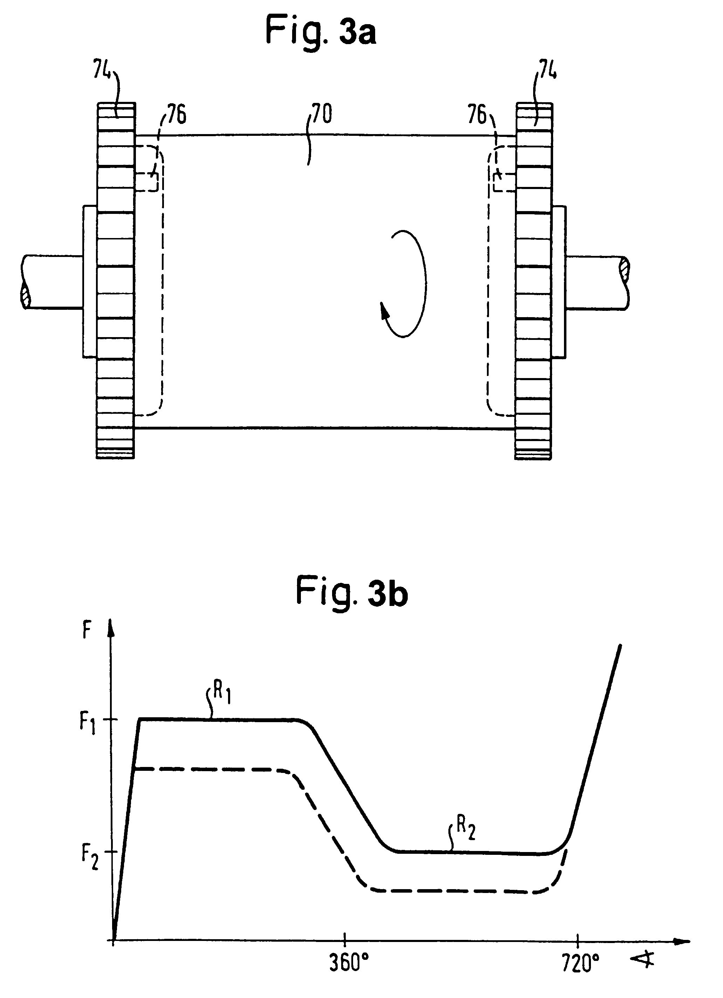

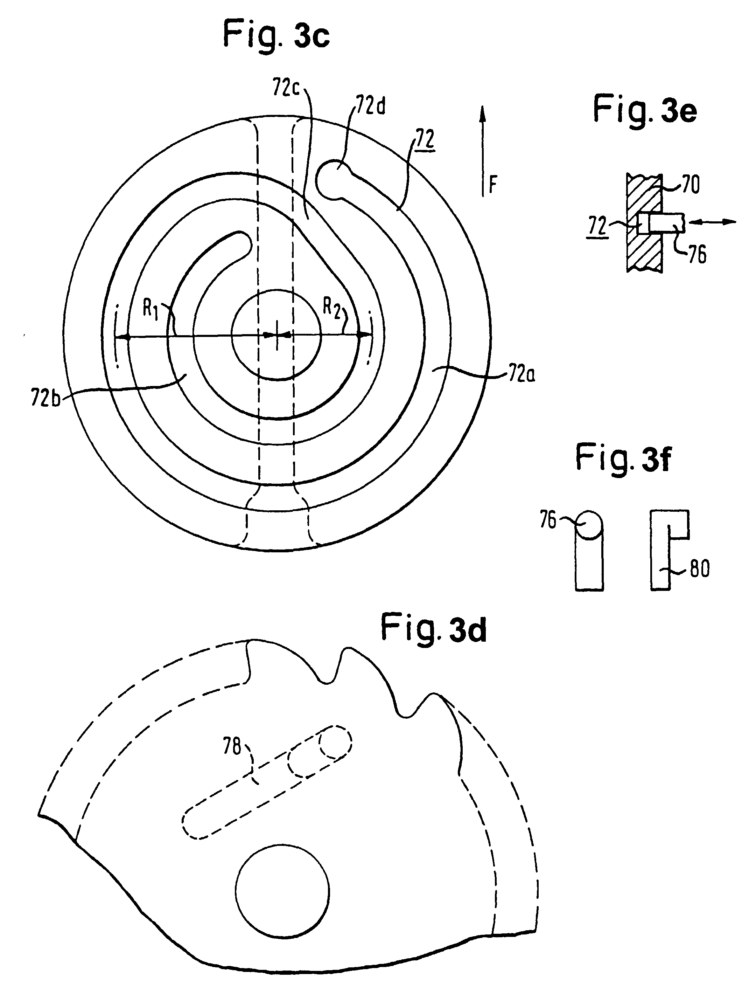

Bei der Ausführungsform nach Fig. 3 ist die Gurtwelle 70 eines Gurtaufrollers an ihren beiden Stirnflächen mit einer ausgesparten, gewundenen Nut 72 versehen. Zwei auf die Stirnflächen der Gurtwelle 70 aufgesetzte Sperrzahnräder 74 sind jeweils durch einen Bolzen 76, der einerseits in die Nut 72 eingreift und andererseits in einer schrägen Nut 78 an der Innenseite der Sperrzahnräder 74 verschiebbar geführt ist, mit der Gurtwelle 70 gekoppelt. Die Nut 72 weist einen äußeren, teilkreisförmigen Abschnitt 72a, einen inneren, ebenfalls teilkreisförmigen Abschnitt 72b und einen Zwischenabschnitt 72c auf, der die Abschnitte 72a und 72b miteinander verbindet. Die Bolzen 76 befinden sich im Ausgangszustand am äußeren Ende 72d der Nut 72.

Bei Blockierung des Gurtaufrollers werden die Sperrzahnräder 74 am Gehäuse des Aufrollers drehfest gehalten. Wenn über das Gurtband ein hohes Drehmoment auf die Gurtwelle 70 ausgeübt wird, dreht sich die Gurtwelle 70 relativ zu den Sperrzahnrädern 74, wobei die Bolzen 76 in der Nut 72 vordringen und die seitlichen Wände der Nut 72 plastisch verformt werden, da der Bolzen 76 breiter ist als die Nut 72. Auf dem äußeren Abschnitt 72a der Nut ergibt sich ein Radius R₁, der zu dem weitgehend konstanten Kraftniveau F₁ im Diagramm der Fig. 3b führt. Nach annähernd einer vollständigen Umdrehung der Gurtwelle 70 treten die Bolzen 76 jeweils in den Zwischenabschnitt 72c der Nut 72 ein, so daß sich nun wegen des progressiv größer werdenden wirksamen Hebelarms, mit dem die Kraft F am Umfang der Gurtwelle 70 angreift, ein abfallender Ast der Kennlinie in Fig. 3b ergibt. Die Einwärtsbewegung der Bolzen 76 wird durch die radiale Komponente der Nut 78 ermöglicht. Sobald der innere Abschnitt 72b der Nut 72 mit dem Radius R₂ erreicht ist, erfolgt eine Kraftbegrenzung auf einem niedrigeren Niveau F₂ in der Kennlinie gemäß Fig. 3b.

In Fig. 3e ist schematisch veranschaulicht, daß die Eindringtiefe der Bolzen 76 in die Nut 72 einstellbar ist. Die Einstellung kann beispielsweise in Abhängigkeit von der Höhe des auf der Gurtwelle 70 verbliebenen Gurtbandwickels erfolgen, da dieses Maß indirekt über die Größe des Fahrzeuginsassen Aufschluß ergibt. Je nach Eindringtiefe der Bolzen 76 in die Nut 72 ergeben sich größere oder kleinere Werte der Kräfte F₁ und F₂, wie in Fig. 3b durch eine gestrichelte Kennlinie veranschaulicht ist.

Wie schließlich aus Fig. 3f ersichtlich ist, sind die Bolzen 76 mit einer abgewinkelten länglichen Führungskufe 80 versehen, die eine sichere Abstützung der Bolzen gewährleisten.

## Patentansprüche

1. Kraftbegrenzer zur Begrenzung der in einem Insassen-Rückhaltesystem mit einem aufblasbaren Rückhalteelement und einem Sicherheitsgurt über den Gurt auf den Insassen ausgeübten Rückhaltekraft durch plastische Materialverformung, wobei die Stärke der plastischen Materialverformung in Abhängigkeit von einem Parameter, der für die Körpergröße oder das Gewicht des Insassen repräsentativ ist, veränderlich ist, dadurch gekennzeichnet, daß er eine die Kraft (F) über den Vorverlagerungsweg (S) darstellenden Kennlinie hat, die im Bereich einer Wegstrecke (S3), nach deren Durchlaufen der Kontakt zwischen Gurtband und aufgeblasenem Rückhalteelement erwartet wird, eine abfallende Tendenz aufweist.

2. Kraftbegrenzer nach Anspruch 1, dadurch gekennzeichnet, daß im Kraftfluß des Gurtsystems eine Kolben/Zylinder-Einheit angeordnet ist, deren Kolben (54) im Zylinder (56) unter plastischer Verformung der Zylinderwandung verschiebbar ist, und daß die Zylinderwandung dem Kolben (54) einen durch eine außen aufgeschobene Hülse (64) einstellbaren Verformungswiderstand entgegensetzt.

3. Kraftbegrenzer nach Anspruch 1, dadurch gekennzeichnet, daß er an einem Gurtaufroller durch eine in wenigstens eine Stirnfläche der Gurtwelle (70) eingebrachte gewundene Nut (72) und einen in diese Nut eingreifenden Bolzen (76), der an einem Sperrzahnrad (74) mit einer radialen Komponente verschiebbar geführt ist, gebildet ist.

4. Kraftbegrenzer nach Anspruch 3, dadurch gekennzeichnet, daß die Nut (72) einen ersten, äußeren, annähernd teilkreisförmigen Abschnitt (72a), einen zweiten, inneren, ebenfalls annähernd teilkreisförmigen Abschnitt (72b) und einen dritten, den ersten mit dem zweiten verbindenden Abschnitt (72c) aufweist.

## Claims

1. A force limiter for the limitation, by way of plastic deformation of material, of restraining force in an occupant restraining system including an inflatable restraining element and a safety belt, as exerted on an occupant via the belt, the degree of the plastic deformation of material being able to be varied as a function of a parameter representative of the body size or weight of the occupant, characterized in that the force limiter has a characteristic representing the force (F) versus the forward displacement path (s) and which has a decreasing tendency in the portion of a distance (s₃) after whose completion a contact between the belt webbing and the inflated restraining element is expected.

2. The force limiter as claimed in claim 1, characterized in that in the force flow of the belt system a piston/cylinder unit is arranged whose piston (54) is able to be shifted in the cylinder (56) with a plastic deformation of the cylinder wall, and in that the cylinder wall opposes the piston (54) with a resistance to deformation adjustable by a sleeve (64) slipped on on the outside.

3. The force limiter as claimed in claim 1, characterized in that it is constituted on a belt retractor by a spiral groove (72) provided in at least one end surface of the belt shaft (70) and by a pin (76) engaging into the groove and which is guided at a locking gear wheel (74) with a radial component of sliding.

4. The force limiter as claimed in claim 3, characterized in that the groove (72) possesses a first, outer and approximately part-circular section (72a), a second, inner, also approximately part-circular section (72b) and a third section (72c) connecting the first section with the second section.

## Revendications

1. Limiteur de force servant à limiter par déformation plastique de matière la force de retenue exercée sur les passagers au moyen d'une ceinture dans un système de retenue des passagers d'un véhicule, comprenant un élément de retenue gonflable et une ceinture de sécurité, la force de la déformation plastique de matière étant variable en fonction d'un paramètre qui est représentatif de la taille du corps ou du poids du passager, caractérisé en ce qu'il possède une courbe caractéristique représentant l'évolution de la force (F) en fonction du trajet de prédéplacement (S), courbe qui présente une tendance décroissante dans la zone d'un trajet (S3), après parcours duquel on s'attend au contact entre la sangle de la ceinture et l'élément gonflable de retenue.

2. Limiteur de force selon la revendication 1, caractérisé en ce que dans le flux des forces du système de ceinture est disposée une unité à piston/cylindre, dont le piston (54) peut coulisser dans le cylindre (56) avec déformation plastique de la paroi du cylindre, et en ce que la paroi du cylindre oppose au piston (54) une résistance à la déformation réglable par un manchon (64) enfilé de l'extérieur.

3. Limiteur de force selon la revendication 1, caractérisé en ce qu'il est formé sur un enrouleur de ceinture par une rainure (72) sinueuse, mise dans au moins une face frontale de l'axe de la ceinture (70) et par un tenon (76) venant en prise dans cette rainure, tenon qui est guidé de façon à pouvoir coulisser sur une roue dentée de blocage (74) avec une composante radiale.

4. Limiteur de force selon la revendication 3, caractérisé en ce que la rainure (72) présente une première section (72a) extérieure, en forme approximativement d'arc de cercle, une deuxième section (72b) intérieure, également en forme approximativement d'arc de cercle et une troisième section (72c) reliant la première section à la deuxième.
